(19) Europäisches Patentamt

European Patent Office

Office européen des brevets

(11) Veröffentlichungsnummer: **0 240 831 B1**

# (12) EUROPÄISCHE PATENTSCHRIFT

(45) Veröffentlichungstag der Patentschrift: **16.12.92**

(21) Anmeldenummer: **87104328.7**

(22) Anmeldetag: **24.03.87**

(51) Int. Cl.⁵: **C12H 1/10**, C12G 1/02

---

(54) **Verfahren und Mittel zur Entsäuerung von Weinen und Mosten.**

---

(30) Priorität: **03.04.86 DE 3611079**

(43) Veröffentlichungstag der Anmeldung:
**14.10.87 Patentblatt 87/42**

(45) Bekanntmachung des Hinweises auf die
Patenterteilung:
**16.12.92 Patentblatt 92/51**

(84) Benannte Vertragsstaaten:
**AT CH DE ES FR GB GR IT LI LU**

(56) Entgegenhaltungen:
EP-A- 0 061 949
DE-B- 1 282 580
GB-A- 1 530 849
US-A- 4 112 128

G. TROOST: "Technologie des Weines", Auflage 5, 1980, Seiten 600-605, Verlag Eugen Ulmer, Stuttgart, DE

(73) Patentinhaber: **BOEHRINGER INGELHEIM KG
Postfach 200
W-6507 Ingelheim am Rhein(DE)**

(84) Benannte Vertragsstaaten:
**CH DE ES FR GR IT LI LU AT**

(73) Patentinhaber: **BOEHRINGER INGELHEIM INTERNATIONAL GmbH
Postfach 20
W-6507 Ingelheim am Rhein(DE)**

(84) Benannte Vertragsstaaten:
**GB**

(72) Erfinder: **Würdig, Gottfried, Dr.
Klausenerstrasse 62
W-5500 Trier(DE)**

EP 0 240 831 B1

## Beschreibung

Die Erfindung betrifft ein Verfahren zur Entsäuerung von Weinen und Mosten, insbesondere solchen, die relativ arm an Weinsäure sind.

Aus der DE-PS 12 82 580 ist ein Verfahren bekannt, nach dem die Hauptsäuren in Wein und Traubenmost, nämlich L(-)-Äpfelsäure und L(+)-Weinsäure, in Form eines sogenannten Calciumdoppelsalzes im Molverhältnis 1 : 1 entfernt werden können.

In bestimmten Jahren und auch bei der Gewinnung von Eisweinen führt jedoch das Verfahren nach der DE-PS 12 82 580 nicht zu einem befriedigenden Ergebnis. Ursache dafür ist der Mangel an Weinsäure. Ein solcher Mangel tritt vor allem bei bestimmten Rebsorten (Riesling, Kerner, Elbling, Ehrenfelser sowie anderen spätreifenden Rebsorten) auf und ist im wesentlichen vom Reifezustand, von den Temperaturverhältnissen vor und während der Traubenlese und den Kellertemperaturen abhängig. Außerdem nimmt der Weinsäuregehalt während der Gärung durch Weinsteinausfall ab. Die Folge ist, daß in manchen Fällen, wo der Most nach dem oben genannten Verfahren noch hätte ausreichend entsäuert werden können, dies bei dem erhaltenen jungen Wein nicht mehr möglich ist.

Um dennoch weinsäurearme Moste und Weine entsäuern zu können, schlägt die EU-PS 61 949 vor, ein aus Calciumcarbonat und Calciumtartrat bestehendes Produkt zu verwenden, um auf diese Weise die für die Doppelsalzbildung benötigte Weinsäure in Form des Calciumsalzes zur Verfügung zu stellen. Das Verfahren hat jedoch erhebliche Mängel.

Die Umsetzung zwischen dem zugegebenen Calciumtartrat und dem aus Calciumcarbonat und im Most oder Wein vorhandener Äpfelsäure entstehenden Calciummalat verläuft langsam. Die Überprüfung ergab, daß die Umsetzung wenigstens 24 Stunden beansprucht, in der Regel jedoch 2 bis 3 Tage.

Während dieser Zeit muß der zu entsäurnde Wein oder Most ständig umgepumpt oder gerührt werden. Zu dem - durch die geringe Umsetzungsgeschwindigkeit bedingten - Zeitaufwand kommt daher noch ein beträchtlicher apparativer Aufwand.

Es wurde nun gefunden, daß die Entsäuerung von Mosten und Weinen, die relativ arm an Weinsäure sind, überraschend schnell gelingt, wenn man in einer Teilmenge der zu entsäuernden Flüssigkeit gemäß dem Verfahren der DE-PS 12 82 580 eine Teilentsäuerung durchführt und dann eine solche Menge einer trockenen Mischung aus Weinsäure und Calciumcarbonat im Molverhältnis 1 : 1 bis 1 : 1,1, vorzugsweise 1 : 1,05, zugibt, daß die zugeführte Weinsäure und der aus der Gesamtmenge der Flüssigkeit zu entfernende Anteil an Weinsäure der zu entfernenden Äpfelsäure äquimolar sind.

Bei der Mischung aus Weinsäure und Calciumcarbonat hat sich ein geringer Überschuß von Calciumcarbonat als vorteilhaft erwiesen. In der Regel wird das Molverhältnis 1 : 1,05 verwendet. Selbstverständlich sind aber auch kleinere Abweichungen von diesem Verhältnis möglich

Durch das erfindungsgemäße Verfahren wird eine Verfälschung des Weines oder Mostes vermieden, da die in Mischung mit Calciumcarbonat zugegebene Weinsäure zwangsläufig in Form des Doppelsalzes wieder entfernt wird.

Das erfindungsgemäß verwendbare Calciumcarbonat entspricht demjenigen, das nach der DE-PS 12 82 580 verwendbar ist. Das Präparat muß sich bei pH-Werten über 4,5 hinreichend schnell auflösen, so daß bei der Zugabe der zu entsäurenden Teilmenge des Mostes oder Weines zu dem aufgeschlämmten Calciumcarbonat im Lauf von 15 Minuten das pH nicht unter 4,5 absinkt. Um das zu gewährleisten, muß das Calciumcarbonat auch bei pH-Werten um 5,5 noch schnell und vollständig im Most/Wein löslich sein.

Die Weinsäure hat zweckmäßig dieselbe Teilchengröße wie das Calciumcarbonat, um eine Trennung zu erschweren, da Weinsäure zu Fälschungszwecken verwendet werden kann. Möglich ist jedoch auch die Verwendung der Weinsäure in der handelsüblichen Korngröße. Wie in der genannten Patenschrift 12 82 580 beschrieben, wird auch im erfindungsgemäßen Verfahren eine kleine Menge des Calciumdoppelsalzes der L(+)-Weinsäure und der L(-)-Äpfelsäure zum Animpfen benutzt.

Die einzelnen Schritte des erfindungsgemäßen Verfahrens sind im folgenden näher erläutert:
Die nachstehend verwendeten Zeichen haben folgende Bedeutung:

A: Für den gewünschten Grad der Entsäuerung benötigte Calciumcarbonat-Menge in Gramm.
E: Gewünschte Entsäuerung um Gramm pro Liter titrierbare Säure.
GS: Vor der Entsäuerung vorhandene Menge titrierbare Säure in Gramm pro Liter.
M: Gesamtmenge des zu entsäuernden Mostes oder Weines in Liter.
RW: Gewünschter Weinsäuregehalt in der intsäuerten Flüssigkeit in Gramm pro Liter (vorzugsweise 1 bis 1,5 g/Liter).
T: Zu entsäuernde Teilmenge in Liter.
WS: Vorhandene Weinsäure in Gramm pro Liter.
Z: Menge des erfindungsgemäß zuzusetzenden Mischung aus Weinsäure und Calciumcarbonat (Molverhältnis vorzugsweise 1 : 1,05) in Gramm.

Zuerst wird nach den bekannten Formeln die für eine Doppelsalzentsäuerung in dem gewünschten Ausmaß erforderliche Menge Kalk für die Doppelsalzentsäuerung und die infrage kommende zu entsäuernde Teilmenge berechnet

$$(A = \frac{2}{3} E \times M; \quad T = \frac{E}{GS-2} \times M)$$

### 1.Stufe

Die berechnete Menge Kalk wird in einer kleinen Menge des zu entsäuernden Mostes oder Weines, die nicht mehr als 5 % der zu entsäuernden Gesamtmenge betragen sollte, angeschlämmt. Dann wird unter ständigem Rühren im Laufe von 15 bis 20 Minuten die restliche Teilmenge zugegeben.

### 2.Stufe

Nach Aufhören der Kohlendioxid-Entwicklung und dem Sichtbarwerden des Flüssigkeitsspiegels wird langsam, d.h. im Verlaufe von mindestens 5, besser jedoch 10 Minuten unter Rühren ein Präparat zugesetzt, dessen Menge nach folgender Formel berechnet wird:

$$Z = 1,7 \times (E - WS + RW - \frac{E \times WS}{GS - 2}) \times M$$

Nach der Zugabe des Präparates zu der zu entsäuernden Most- bzw. Weinteilmenge wird anschließend noch 20 - 30 Minuten weitergerührt und danach das ausgeschiedene Doppelsalz wie üblich abgetrennt, vorzugsweise durch Kieselgurfilter. Der gesamte Entsäuerungsvorgang dauert etwa 1 Stunde.

### 3.Stufe

Nach dem Abtrennen des ausgeschiedenen Doppelsalzes von der entsäuerten Teilmenge, wobei diese vollständig, einschließlich der im Filterkuchen enthaltenen Volumina zurückgewonnen werden muß, wird die entsäuerte Teilmenge mit der nicht entsäuerten Teilmenge verschnitten.

Danach erfolgt im Verlaufe der anschließenden 6 Wochen die sogenannte Calciumrückfällung, wobei der bei dieser Verfahrensweise nur leicht erhöhte Calciumgehalt durch die im nicht entsäuerten Anteil noch vollständig vorhandene Weinsäure als Calciumtartrat ausgefällt und damit normalisiert wird.

Anwendungsbeispiel

In der folgenden Tabelle ist der Verlauf einer Entsäuerung nach dem erfindungsgemäßen Verfahren dargestellt im Vergleich zu einer Entsäuerung/Doppelsalzfällung mittels Calciumtartrat (Verfahren nach EU-PS 00 61 949)). Da bei diesem Verfahren die Umsetzung nach einer Stunde noch sehr unvollständig ist, wurden sowohl die Ergebnisse nach einer Stunde als auch nach 24 Stunden aufgezeigt.

Die Zusammensetzung des zur Entsäuerung ausgewählten Weines und die Ergebnisse der Entsäuerungsversuche sind in der folgenden Tabelle zusammengestellt:

Zusammensetzung des Weines vor der Entsäuerung

| Verfahren | Titrier-bare Säure g/l | pH | Wein-säure g/l | Äpfel-säure g/l | Calcium mg/l | Ver-fahrensens-dauer |
|---|---|---|---|---|---|---|
| | 16,6 | 2,98 | 1,93 | 14,2 | 127 | |

Zusammensetzung der entsäuerten Teilmenge

| Verfahren | Titrier-bare Säure g/l | pH | Wein-säure g/l | Äpfel-säure g/l | Calcium mg/l | Ver-fahrensens-dauer |
|---|---|---|---|---|---|---|
| Erfindungsge-mäßes Verfahren | 2,15 | 4,53 | 0,60 | 2,04 | 248 | nach 1 Std. |
| Erweiterte Ent-säuerung mit Calciumtartrat nach EU-PS | 3,00 | 4,69 | 0,15 | 10,78 | 2040 | nach 1 Std. |
| 0061 949 | 1,88 | 4,55 | 0,25 | 2,84 | 320 | nach 24 Std. |

Zusammensetzung des Verschnittes der entsäuerten und der nichtentsäuerten Teilmenge zur Calcium-Rückfällung

| Verfahren | Titrier-bare Säure g/l | pH | Wein-säure g/l | Äpfel-säure g/l | Calcium mg/l | Ver-fahrensens-dauer |
|---|---|---|---|---|---|---|
| Erfindungsge-mäßes Verfahren | 7,98 | 3,88 | 1,17 | 7,00 | 198 | nach 1 Std. |
| Erweiterte Ent-säuerung mit Calciumtartrat nach EU-PS | 8,40 | 3,75 | 0,92 | 11,60 | 1240 | 1 Std. |
| 0061 949 | 7,80 | 3,45 | 1,00 | 7,57 | 240 | nach 24 Std. |

Entsäuerte Teilmenge = 589 Liter;
Gewünschter Endsäuregehalt 8,0 g/l

Nichtentsäuerte Teilmenge = 411 Liter;
Gewünschte Säureverminderung E = 8,6

Gesamtmenge M = 1000 Liter;
Restweinsäuregehalt RW = 1,0

**Patentansprüche**

1. Verfahren Zur Entsäuerung von Weinen und Mosten, die arm an Weinsäure sind, wobei man in der ersten Verfahrensstufe die Teilmenge T gemäß der Formel

$$T = \frac{E}{GS - 2} \times M \qquad (I)$$

4

(E: pro Liter zu entfernende titrierbare Säure in Gramm, GS: titrierbare Säure in Gramm pro Liter, M: Gesamtmenge des zu entsäuernden Mostes oder Weines in Liter) mit der nach der Formel

$$A = \frac{2}{3} \; x \; E \; x \; M \qquad (II)$$

(A: benötigte Menge Calciumcarbonat in Gramm) berechneten Menge Calciumcarbonat umsetzt, dadurch gekennzeichnet, daß man in der zweiten Verfahrensstufe eine nach der Formel

$$Z = 1,7 \; x \; (E - WS + RW - \frac{E \; x \; WS}{GS - 2}) \; x \; M \qquad (III)$$

(Z: Menge der erfindungsgemäß zuzusetzenden Mischung aus Weinsäure und Calciumcarbonat in Gramm, WS: in der Flüssigkeit vorhandene Weinsäure in Gramm pro Liter, RW: gewünschter Weinsäuregehalt in der entsäuerten Flüssigkeit nach Durchführung des Verfahrens in Gramm pro Liter) berechnete Menge einer Mischung von Weinsäure und Calciumcarbonat im Molverhältnis 1 : 1 bis 1 : 1,1, vorzugsweise 1 : 1,05, zusetzt und in der dritten Stufe nach Abtrennung des sich bildenden Doppelsalzes die entsäuerte Teilmenge mit der unbehandelten Restmenge verschneidet.

2. Verfahren nach Anspruch 1, dadurch gekennzeichnet, daß man bei der Entsäuerung der Teilmenge zunächst das Calciumcarbonat mit einem kleinen Teil der Teilmenge (bis zu 5% der Gesamtmenge) anschlämmt und dann im Lauf von 15 bis 20 Minuten den Rest der Teilmenge unter Rühren zugibt.

3. Verfahren nach Anspruch 1 oder 2, dadurch gekennzeichnet, daß man nach dem Aufhören der Kohlendioxid-Entwicklung die Menge Z der Mischung aus Weinsäure und Calciumcarbonat unter Rühren im Verlauf von etwa 10 Minuten zusetzt.

4. Verfahren nach Anspruch 1 bis 3, dadurch gekennzeichnet, daß in der Mischung von Weinsäure un Calciumcarbonat die Komponenten im wesentlichen dieselbe Teilchengröße aufweisen.

5. Verwendung eines Mittels, dadurch gekennzeichnet, daß es Weinsäure und Calciumcarbonat im Molverhältnis 1 : 1 bis 1 : 1,1 enthält, zur Durchführung des Verfahrens nach Anspruch 1 bis 4.

**Claims**

1. A process for de-acidifying wines and grape-juices deficient in tartaric acid, in which, in the first process step, the partial amount T according to the Formula

$$T = \frac{E}{GS - 2} \; x \; M \qquad (I)$$

(E: titratable acid in grammes to be removed, per litre, GS: titratable acid in grammes, per litre, M: total amount of grape-juice or wine to be de-acidified, in litres) is reacted with the amount of calcium carbonate, calculated according to the formula

$$A = \frac{2}{3} \; x \; E \; x \; M \qquad (II)$$

(A: required amount of calcium carbonate, in grammes),

characterised in that, in the second process step, an amount of a mixture of tartaric acid and calcium carbonate, which is calculated according to the formula

$$Z = 1.7 \times (E - WS + RW - \frac{E \times WS}{GS - 2}) \times M \quad (III)$$

(Z: amount in grammes of the mixture of tartaric acid and calcium carbonate to be added, according to the invention, WS: tartaric acid in grammes, per litre, present in the liquid, RW: required amount of tartaric acid in the de-acidified liquid, in grammes, per litre, after carrying out the process), is added in a molar ratio of 1 : 1 to 1 : 1.1, preferably 1 : 1.05, and that, in the third step, the de-acidified partial amount is adulterated with the untreated residual amount, after removing the double salt formed.

2. A process according to claim 1, characterised in that, when de-acidifying the partial amount, the calcium carbonate is, at first, elutriated with a small part of the partial amount (up to 5% of the total amount), and then the remainder of the partial amount is added, whilst stirring, within 15 to 20 minutes.

3. A process according to either claim 1 or 2, characterised in that the amount Z of the mixture of tartaric acid and calcium carbonate is added, whilst stirring, within approximately 10 minutes after the carbon dioxide development has ceased.

4. A process according to claims 1 to 3, characterised in that the components in the mixture of tartaric acid and calcium carbonate have largely the same particle size.

5. Use of an agent, characterised in that it contains tartaric acid and calcium carbonate in a molar ratio of 1 : 1 to 1 : 1.1, for implementing the process according to claims 1 to 4.

**Revendications**

1. Procédé de désacidification de vins et de moûts qui sont pauvres en acide tartrique, dans lequel, dans la première étape du procédé, on fait réagir la quantité partielle T selon la formule

$$T = \frac{E}{GS - 2} \times M \quad (I)$$

(E: acide titrable à éliminer par litre, en grammes, GS: acide titrable en grammes par litre, M: quantité totale de moût ou de vin à désacidifier en litres) avec la quantité de carbonate de calcium calculée selon la formule

$$A = \frac{2}{3} \times E \times M \quad (II)$$

(A: quantité nécessaire de carbonate de calcium en grammes), caractérisé en ce que, dans la deuxième étape du procédé, on ajoute une quantité d'un mélange d'acide tartrique et de carbonate de calcium, calculée selon la formule

$$Z = 1,7 \times (E - WS + RW - \frac{E \times WS}{GS - 2}) \times M \quad (III)$$

(Z: quantité, en grammes, de mélange selon l'invention d'acide tartrique et de carbonate de calcium à ajouter, WS: acide tartrique présent dans le liquide en grammes par litre, RW: teneur en acide tartrique souhaitée dans le liquide désacidifié après la mise en oeuvre du procédé, en grammes par litre), dans le rapport molaire de 1:1 à 1:1,1, de préférence de 1:1,05, et dans la troisième étape, après séparation du sel double qui se forme, on coupe la quantité partielle désacidifiée avec la quantité résiduelle non traitée.

2. Procédé selon la revendication 1, caractérisé en ce que, lors de la désacidification de la quantité partielle, on met tout d'abord en suspension le carbonate de calcium avec une petite partie de la quantité partielle (atteignant 5% de la quantité totale) puis on ajoute en 15 à 20 minutes le reste de la quantité partielle sous agitation.

3. Procédé selon la revendication 1 ou 2, caractérisé en ce que, après l'arrêt du dégagement de dioxyde de carbone, on ajoute en environ 10 minutes sous agitation la quantité Z de mélange d'acide tartrique et de carbonate de calcium.

4. Procédé selon les revendications 1 à 3, caractérisé en ce que les composants présentent sensiblement la même taille de particules dans le mélange d'acide tartrique et de carbonate de calcium.

5. Utilisation d'un agent caractérisé en ce qu'il contient de l'acide tartrique et du carbonate de calcium dans le rapport molaire de 1:1 à 1:1,1 pour la mise en oeuvre du procédé selon les revendications 1 à 4.